# EUROPEAN PATENT SPECIFICATION

(11) **EP 1 969 941 B1**
(45) Date of publication and mention of the grant of the patent: **14.07.2010**
(21) Application number: 08152853.1
(22) Date of filing: 17.03.2008
(51) Int. Cl.: A21B 3/04, A21D 15/02, A21D 15/06

(54) **Device and method for preparing bread**
Vorrichtung und Verfahren zur Herstellung von Brot
Dispositif et procédé pour la préparation de pain

(30) Priority: 15.03.2007 NL 2000544
(43) Date of publication of application: 17.09.2008
(73) Proprietor: Bakkersland Hedel B.V., 5321 JV Hedel (NL)
(72) Inventor: Dieks, Franciscus, Antonius, Hermanus, 6596 DB, Milsbeek (NL)
(74) Representative: Prins, Hendrik Willem

(56) References cited:
- EP-A- 1 161 873
- WO-A-92/02150
- DE-A1- 10 254 356
- FR-A- 2 116 805
- GB-A- 1 413 481
- JP-A- 5 076 267
- JP-A- 5 236 862
- RU-C2- 2 165 707
- US-A- 2 072 737
- US-A- 5 707 674

## Description

The preparation of bread in traditional manner takes place to a limited extent nowadays. The major part of bread preparation takes place on industrial scale. A large part of industrially made bread is baked daily in industrial bakeries and subsequently transported to a retail location, and there put on sale and sold. Another part of industrially made bread is prebaked in industrial bakeries, and the thus prebaked bread is transported to the retail location and subsequently baked off, optionally processed, put on sale and sold.

The term 'bread' is here understood to mean not only large loaves in the classic sense of the word, but also French bread and small products such as rolls. White, brown, wholemeal and other types of bread, as well as laminated dough products such as croissants and apple turnovers and pizzas and other dough products for baking, also fall within the term 'bread' as used here.

High logistical demands are made in the case of industrially baked bread because this bread has a limited shelf life and must therefore be baked fresh every day. In the case of industrially prebaked bread the logistical requirements are different because, using a cooled logistic chain, it has a much longer shelf life, i.e. a number of days, in the prebaked state. This method of bread preparation is not applied optimally in practice, since only the estimated quantity of bread necessary for the day is usually baked off at the beginning of this day at the retail location. A significant part of the thus baked-off bread is therefore on sale for a great part of the day. The optimum effect of this bake-off method is therefore not achieved. It is possible in principle to bake off batches of bread spread over the opening time of the retail location, but this makes great demands of the organizational talent and knowledge of the people employed in this bakery shop, all the more so as in the currently applied method quite a lot of space is required to allow cooling for a time of the bread coming out of the oven, while usually only little space is available at retail locations. The demand for bread also varies quite strongly and is not always readily predictable.

WO 92/02150 relates to a method and apparatus for making baked-off bread. The oven comprises two door openings, each closable with a door for bread that is to be baked or has been baked, respectively. Vacuum resistant closing means are located between the door and the door opening. The bread is heated by dielectric heating means (micro or radio-frequency waves) and by electrical resistant heaters. The micro or radio-frequency waves penetrate throughout the entire or bulk of the bread to be baked off. Pressure will built up due to the rapid creation of heat and steam. External steam is used as a counter pressure, thereby limiting the risk for product explosion. The heat treatment is followed by vacuum cooling using a vacuum pump. Under this vacuum the baked bread will rapidly cool.

JP 05076267 discloses an oven for baking a bread dough into a baked bread. The oven comprises external heating means in the form of a heater, and inner heating means such as a magnetron. After baking, the oven is subjected to a vacuum to reduce the water content.

DE 10253456 discloses a method for moistening pre-baked, deep frozen bakery products. In order to compensate for the loss of moisture, the deep frozen pre-baked bread is subjected to a vacuum. Subsequently, saturated steam is added. After absorption of a sufficient amount of water, the steam supply is stopped and normal pressure restored. The moistening of the deep frozen pre-baked bread may continue during thawing and pre-heating. The moistened pre-baked bread is baked in an oven.

There is therefore a need for a method and a device for preparing bread in which the above stated problems are obviated.

The present invention provides for this purpose a method for preparing fresh bread, comprising the steps of preparing at least preprocessed bread and baking off the at least preprocessed bread in a bake-off oven by heating the bread wherein, after baking-off of the preprocessed bread, the thus baked-off bread is cooled in the bake-off oven by means of vacuum cooling.

Using the above stated measures the time duration between baking-off of the bread and placing the bread on sale is greatly reduced. The consequence hereof is that it is possible to more quickly anticipate the demand for bread. Less space is also necessary to allow cooling of the bread. It is pointed out here that it is usual in the prior art for bread to require one to two hours for cooling before it can be properly sliced and packaged without detracting from the quality.

The present invention also provides for this purpose an oven for preparing fresh bread, comprising heating means for heating bread placed in the interior of the oven and at least one door opening closable with a door for the purpose of carrying bread that is to be baked or has been baked into and out of the interior of the oven, wherein the oven is provided with vacuum means for creating a vacuum in the interior of the oven and by vacuum-resistant closing means between the door and the door opening.

A preferred embodiment provides the measure that the vacuum cooling takes place by reducing the pressure prevailing in the oven to a final pressure at which the dew point is lower than 30°C. By reducing the pressure inside the oven the moisture present in the bread will partially evaporate, whereby the evaporation heat of the moisture is extracted from the bread and the temperature of the bread is reduced. Put another way, the dew point is reduced by reducing the pressure inside the oven, whereby evaporation will occur with the above stated result. This method prevents the crust becoming soft through migration of moisture from the crumb.

In classic ovens, and also in bake-off ovens, heating takes place by radiation and/or convection with air. The baking process thus takes up a lot of time. Particularly, though not exclusively, in the case of baking or baking-off at the retail location there is a need for a rapid baking process. Not only does it hereby become possible to make use of fewer ovens, but a greater flexibility is also obtained so that it is possible to respond quickly to the demand for bread of a particular type. In order to enable more rapid baking, a further embodiment proposes that heating of the bread placed in the interior of the oven takes place by means of supplying steam to the interior of the oven. This embodiment also proposes an oven wherein the heating means comprise steam heating means for the purpose of heating bread placed in the interior of the oven by means of steam.

During baking to a temperature above 60°C the so-called retrogradation of the starch, whereby it has been converted to its crystallized form, is reversed and it returns to its gelatinized form, whereby the bread becomes softer. According to a preferred embodiment, the steam is therefore supplied at a temperature higher than 60°C. It is noted here that retrogradation occurs particularly in the case of bread that is already fully baked and in prebaked bread. It is precisely in the processing of these types of bread according to the invention that this measure is applied to make the bread fresh. The moisture balance is hereby also restored in controlled manner. Other processes also play a part when bread is fully baked, such as fixing of the gluten network by coagulation of the protein in order to give the bread its specific firmness.

When steam is supplied it is important that no condensation occurs on the crust, since this would result in the crust becoming moist and therefore soft, when it is precisely the intention that it becomes crispy. An embodiment provides for this purpose the measure that the steam is supplied at a steam pressure which increases gradually to a final pressure which is higher than that associated with a dew point of 60°C. The slow increase in the steam pressure is important here in maintaining the shape of the bread, because with a sudden increase in pressure the bread would be deformed.

Particularly during heating of already fully baked bread and in the case of prebaked bread, it is important that the temperature of at least 60°C is maintained for a sufficiently long time in the core of the crumb in order to reverse the retrogradation process; tests have shown that the time duration between 1 and 10 minutes, preferably between 4 and 6 minutes, is sufficient in the case of most types of bread for the core of the crumb of the bread to reach this temperature. It is also pointed out here that, when bread is fully baked, longer periods of time may be necessary because other processes must then also be completed.

In order to make the heating process taking place during the supply of steam more effective, so that it is possible to suffice with a shorter baking time, it is recommended that a vacuum be created in the interior of the oven prior to heating of the oven by means of steam. This is because the air present in the interior of the oven is hereby displaced so that the steam entering after the creation of the vacuum reaches the bread more easily, while, due to the initially decreased pressure, condensation and thereby heat transfer from the steam to the bread takes place more quickly. The supply of heat and moisture continues until the dew point is reached.

The above elucidated heating process relates substantially to reversing the retrogradation of the starch and, when use is made of dough, to the forming of a gluten network; it has little influence on the crust. An important quality criterion for bread is after all the browning of the crust caused by Maillard reactions and by caramelization of carbohydrates. This effect cannot be achieved with steam heating, or hardly so. In order to nevertheless provide the bread with this quality feature, it is important that the interior of the oven is heated by means of IR radiation prior to heating of the bread by means of steam. This IR heating step can herein be performed prior to creating a vacuum in the oven, after creating the vacuum, during this process or during a combination of these processes. It is pointed out here that the temperature of the crust must become sufficiently high to avoid condensation of the steam on the crust, which has meanwhile become crispy, during the steam heating step following this step. The method therefore relates to an oven of the above described type, wherein the heating means comprise at least one IR radiator.

Tests have shown that good results can be obtained in respect of the crust when the oven is heated to a temperature between 130°C and 250°C, wherein even more optimal results are obtained at a temperature between 150°C and 180°C. This is particularly the case when baking off prebaked bread; when dough is fully baked the optimum temperature lies between 170°C and 250°C.

In order to obtain a more uniform browning and drying of the crust, it is recommended that the heat emitted by the IR radiators is distributed by convection.

It is attractive, particularly in order to avoid as far as possible the work steps of placing the bread into and removing it from the oven or other treatment spaces, that all steps of the method are performed in the same oven.

An important field of application is in the baking-off of prebaked bread. In order to be able to respond quickly at the retail location to variations in the demand for bread, it is recommended to make use of a method of the type as elucidated above, wherein the preparation of bread is performed at a retail location and wherein the at least preprocessed bread is formed by prebaked bread. This bread can be prebaked on-site at the retail location, although it is likewise possible for the bread to be prebaked elsewhere at a production location.

The method according to the invention can be applied not only to bake off prebaked bread, the particular features of the process, such as the use of steam, also make it possible to process stale or old bread so that it regains the properties of fresh bread. It is therefore attractive when the method is performed at a retail location and when the at least preprocessed bread is formed by baked-off bread. When bread becomes stale this is due to the retrogradation of the starch in the crumb of the bread, whereby it becomes crumbly and less soft and the crust also becomes soft. Both effects are reversed by the method according to the invention; the heating to a temperature above 60°C wholly reverses the retrogradation of the starch, while the heating of the crust by means of IR radiation restores the crispness to the crust. It will be apparent that this will result in exceptional logistic advantages, and in an optimum perception of freshness at the moment of purchase.

The invention is not only applicable to the above mentioned prebaked or fully baked-off bread but also to bread to be fully baked, in particular rolls, making use of dough. This dough must then be prepared at a production location and baked and cooled. Because the products are available for sale immediately after the process has ended or, in the case of a loaf, can be sliced and packaged, the advantages of the method of the invention are also obtained here.

For an automated operation of the above elucidated processes it is attractive that the oven be provided with a control member for controlling the steam heating means, the vacuum means and the IR radiator.

Subsequently the present invention will be elucidated with reference to the accompanying drawings, in which:
Figure 1 shows a schematic cross-sectional view of an oven adapted for vacuum cooling; and
Figure 2 shows a block diagram elucidating the method according to the invention.

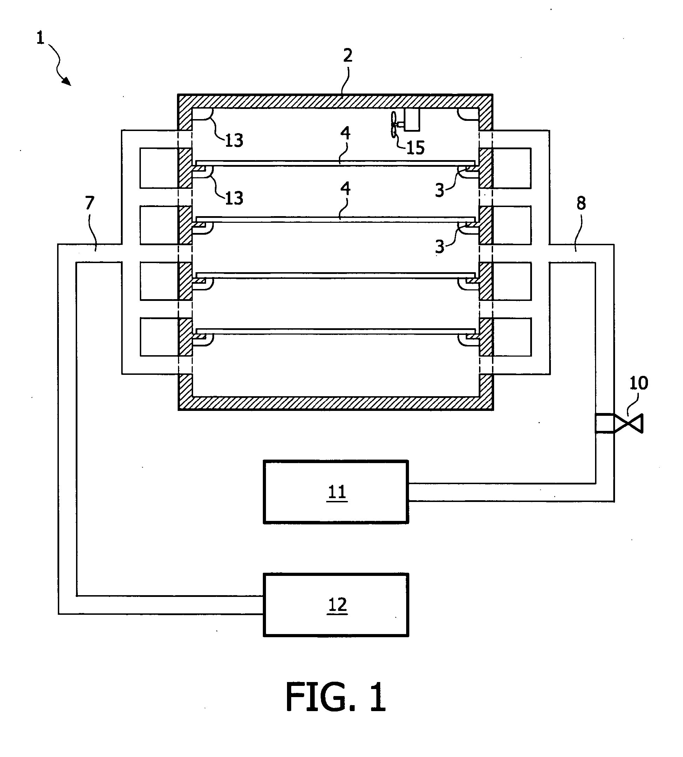

The oven shown in figure 1 and designated in its entirety with 1 comprises a housing 2 preferably manufactured from double-walled stainless steel. Housing 2 is provided with at least one door, not shown in the drawing, which in the closed position closes the housing from the environment and which can withstand overpressures and underpressures. Carriers 3 are arranged in the housing in per se known manner for the purpose of supporting baking trays 4 with loaves for baking.

In the side walls of the housing are arranged openings, which on the left are each connected to a conduit 7 and which on the right are each connected to a conduit 8. The left-hand conduit is connected to a vacuum device 12 and the right-hand conduit is connected via a valve 10 to a steam generating and distributing device 11. IR radiators 13 are also arranged in housing 2. A computer is also arranged for controlling the diverse components during the operations to be performed. Finally, oven 1 comprises a fan 15 which is arranged in the interior of the oven housing, but which can likewise be arranged outside the oven housing.

Diverse modifications can of course be made to the device as elucidated with reference to figure 1. It is thus possible for instance to make use of a door which is movable by means of a parallelogram suspension between a closed position, in which the cavity is closed, and an open position in which this cavity is accessible.

The method according to the invention will now be elucidated. Baking-off of bread is first described, then restoring freshness to bread, and finally full baking of bread making use of dough.

When bread is baked off, the prebaked bread is placed on baking trays 4 and the baking trays are placed through the opened door onto carriers 3. The door is then closed and IR radiators 13 are switched on. It is also possible, in order to shorten the overall time duration of the process, to switch on IR radiators 13 in advance so that the prebaked loaves can be placed in a preheated oven. It is likewise possible for fan 15 to be switched on for more uniform distribution of the heat inside the oven space. The purpose of this heating step is to dry and brown the crust of the bread for baking, and to preheat the crust to a temperature at which the dew point is exceeded in the subsequent steam heating steps so that condensation of moisture onto the crust, and thereby softening of the crust, does not take place. The temperature reached during this process step preferably lies between 180°C and 270°C, and more preferably between 200°C and 240°C. The duration of this step during baking-off lies between 1 and 10 minutes since, in addition to colouring, a certain crispness of the crust must be obtained.

A vacuum is then created in the oven by making use of vacuum pump 12. A pressure is hereby reached in the interior of the oven of about 35 mbar.

As third step the steam generating and distributing device 11 is switched on for the purpose of generating steam and feeding steam via conduit 7 to the interior of oven 2. During this step the retrogradation process of the crumb is reversed. It is necessary for this purpose for the bread to be heated during this step to a temperature higher than 60°C. The use of steam results in a considerably more rapid heating process because use is made of the condensation heat of the steam, which is relinquished particularly to the crumb of the bread. A rapid heating to the dew point thus takes place and, after this has been reached, heat transfer takes place only on the basis of temperature difference. In order to increase the dew point it is attractive to feed the steam at an increased pressure. In order to prevent compression of the bread it is important that the pressure is increased slowly, wherein use is preferably made of the whole time duration of this process step. It is pointed out that the effectiveness of this heating step is greatly enhanced by beginning this process step with a vacuum, so that the time duration required is greatly reduced. Tests have shown that with a time duration of 3 to 5 minutes a sufficiently firm and crispy crust and a soft crumb is obtained. The process will require more time in the case of deep-frozen prebaked products.

After completion of the baking process, vacuum device 13 is switched on for the purpose of generating a vacuum in housing 2. Use is preferably made here of the program as set forth above, i.e. a buildup of the vacuum followed by a rapid release. Vacuum device 13 is of course provided with means for discharging the moisture released when the vacuum is formed in housing 2.

When the pressure inside housing 2 has reached the value of the ambient pressure, the door can be opened again and baking trays 4 with loaves can be taken out. Owing to the vacuum process the loaves have then been so strongly cooled that they can easily be further processed, such as sliced or packed.

The process for restoring freshness to stale bread largely corresponds with the steps elucidated above in respect of baking-off bread. The most important difference lies in the adjustment of temperatures and time durations of the heating processes. It is thus only necessary during the IR heating step to impart crispness to the crust, in addition of course to heating the crust to a temperature higher than the dew point reached in the subsequent steps. In addition, a temperature above 60°C need only be reached during the steam heating step in order to reverse retrogradation of the starch.

Conversely, the stated times will have to be increased during full baking of bread in order to bring about complete fixation of the gluten network in the crumb, gelatinization of the starch in the crumb and colouring of the crust.

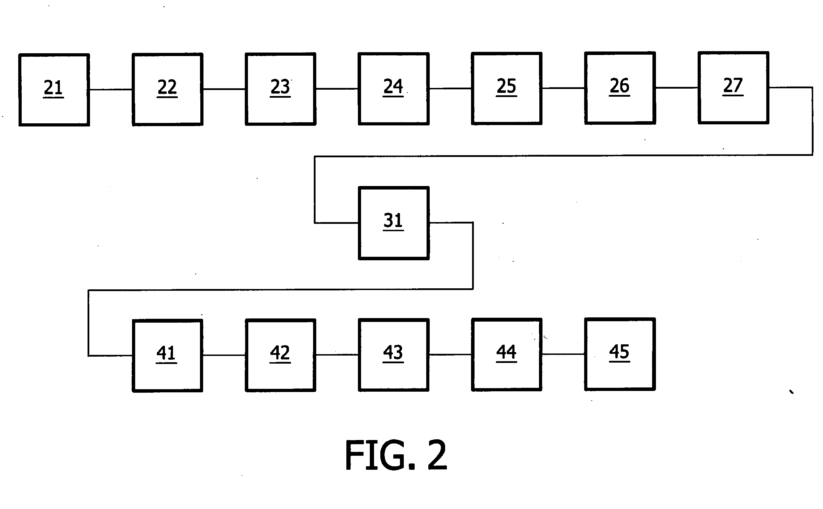

The measures of the above described baking process affect the whole chain of bread preparation by means of the baking process elucidated above and shown schematically in figure 2.

The preparation of bread by means of prebaked bread is here also described first. This preparation begins with preparation of the dough as represented by 21 in figure 2. A prolonged rising process 22 then takes place. After rising 22 the bread is baked 23, this preferably by heating using steam, whereby water loss is also reduced. The thus obtained prebaked bread is cooled to a limited extent in a cooling process 24 following baking process 23. As a result of this limited cooling the prebaked bread is packed at a high temperature of above 74°C in a packaging step 25, thereby preventing as far as possible the danger of contamination by micro-organisms, in particular fungi. The packaging is adapted here to prevent condensation against the inner side of the packaging by making use of semi-permeable materials for the package. The temperature of the thus packed bread is decreased gradually in order to enable the moisture released during this cooling 26 to be absorbed into the bread. The thus packaged bread is then stored 27 at an increased temperature higher than the normally used storage temperature of 6°C, once again to prevent condensation of the bread with an increased moisture content.

After storage the bread is transported to the retail location in a transport step 31. This transport preferably also takes place at a temperature higher than normal.

Having arrived at the retail location the bread is stored 41, again at a somewhat increased temperature. When the time arrives to bake off the bread, the bread is unpacked in step 42 and baked in oven 1 in process step 43, as already elucidated with reference to figure 1. After baking 43 the baked-off bread is cooled in step 44. This cooling takes place preferably, though not necessarily, in the same housing 2 that is used for the baking. This is therefore a combination device adapted for baking and cooling, which saves space and avoids a displacing operation. It is however equally possible to make use of a separate oven and a separate cooling device. After the bread has been taken out of the cooling device, it can be immediately sliced and packed in step 45. Due to the cooling of the bread it has become possible to radically reduce the time duration between the beginning of the bake-off process and being able to place the bread on sale from between one and a half and two hours to about 15 minutes.

This provides the possibility of responding much more quickly to the demand for fresh bread, so that fresh bread can be on sale at all times. This also provides the option of a customer, upon entering a retail location such as a supermarket, ordering his/her bread and about 15-20 minutes later being able to take away his/her freshly baked bread when he/she pays. The size of the oven and the cooling device, and thereby the batch size, are important here. Finally, it is pointed out that different types of bread can be baked simultaneously within one batch, thereby further increasing flexibility.

It will be apparent to the skilled person that similar steps are taken when bread is fully baked; the steps 21 of preparing dough and allowing dough 22 to rise here take place at the retail location, after which steps 43-45 take place in the same manner as elucidated above, with the understanding that the temperatures and time durations of the baking process are modified, since this is not prebaked bread. It is of course otherwise also possible for all these steps to take place at a production location.

Only the steps 43-45 as elucidated above are applied when restoring freshness to bread.

## Claims

1. Method for preparing fresh bread, such as white bread, brown bread , wholemeal bread, French bread, small products such as rolls, laminated dough products such as croissants and apple turnovers, pizzas and other dough products for baking, comprising the following steps of:
- preparing at least preprocessed bread;
- creating a vacuum in the interior of the oven prior to heating of the bread by using steam;
- baking off the at least preprocessed bread in the oven by heating the bread by means of supplying steam to the interior of the oven; and
- after baking-off of the preprocessed bread, the thus baked-off bread is cooled in the oven by means of vacuum cooling.

2. Method as claimed in claim 1, wherein the vacuum cooling takes place by reducing the pressure prevailing in the oven to a final pressure at which the dew point is lower than 30°C.

3. Method as claimed in claim 1 or 2, wherein the steam is supplied at a temperature higher than 60°C.

4. Method as claimed in claim 1-3, wherein the steam is supplied at a steam pressure which increases gradually to a final pressure which is higher than that associated with a dew point of 60°C.

5. Method as claimed in any of the claims 1-4, wherein the steam is supplied for a time duration of between 1 and 10 minutes, preferably between 4 and 6 minutes.

6. Method as claimed in any of the claims 1-5, wherein the interior of the oven is heated by means of IR radiation prior to heating of the bread by means of steam.

7. Method as claimed in claim 6, wherein the oven is heated until the crust temperature has reached a value which lies above the dew point of the steam during heating of the oven by means of steam.

8. Method as claimed in claim 6 or 7, wherein the oven is heated to a temperature between 130°C and 270°C, preferably between 150°C and 200°C.

9. Method as claimed in claim 6-8, wherein the heat emitted by the IR radiators is distributed by convection.

10. Method as claimed in any of the foregoing claims, wherein the method is performed at a retail location and that the at least preprocessed bread is formed by prebaked bread or by baked-off bread.

11. Method as claimed in any of the claims 1-11, wherein the method is performed at a retail location and the preprocessed bread is formed by dough.

12. Oven (1) for preparing fresh bread, comprising:
- at least one door opening closable with a door for the purpose of carrying bread that is to be baked or has been baked into and out of the interior of the oven;
- vacuum-resistant closing means between the door and the door opening;
**characterized in that** the oven comprises:
- heating means for heating bread placed in the interior of the oven, comprising steam heating means (11) for heating bread placed in the interior of the oven;
- vacuum means (12) for creating a vacuum in the interior of the oven before baking-off and after baking-off.

13. Oven according to claim 12, comprising means (13) for IR radiation prior to heating of the bread by means (11) of steam.

14. Oven according to claim 12 or 13, placed at a retail location.

## Patentansprüche

1. Verfahren zum Zubereiten von frischem Brot, wie zum Beispiel Weißbrot, Mischbrot, Vollkornbrot, Stangenbrot, kleinen Produkten, wie zum Beispiel Brötchen, blättrige Teigprodukte, beispielsweise Croissants und Apfelteigtaschen, Pizzas und andere Teigprodukte zum Backen, das die folgenden Schritte umfasst:
- Zubereiten von zumindest vorverarbeitetem Brot;
- Erzeugen eines Vakuums in dem Inneren des Ofens vor einem Erhitzen des Brotes unter Verwendung von Dampf;
- Ausbacken des zumindest vorverarbeiteten Brotes in dem Ofen durch Erhitzen des Brotes mittels Zuführung von Dampf in das Innere des Ofens; und
- nach dem Ausbacken des vorverarbeiteten Brotes wird das somit ausgebackene Brot in dem Ofen mittels Vakuumkühlung gekühlt.

2. Verfahren wie in Anspruch 1 beansprucht, wobei die Vakuumkühlung durch Reduzieren des in dem Ofen vorherrschenden Druckes auf einen Enddruck, bei dem der Taupunkt geringer als 30°C ist, stattfindet.

3. Verfahren wie in Anspruch 1 oder 2 beansprucht, wobei der Dampf bei einer Temperatur größer als 60°C zugeführt wird.

4. Verfahren wie in Anspruch 1-3 beansprucht, wobei der Dampf mit einem Dampfdruck, der graduell bis zu einem Enddruck, der größer ist als der, der einem Taupunkt von 60°C zugeordnet ist, zunimmt, zugeführt wird.

5. Verfahren wie in einem der Ansprüche 1-4 beansprucht, wobei der Dampf für eine Zeitdauer zwischen 1 und 10 Minuten, vorzugsweise zwischen 4 und 6 Minuten, zugeführt wird.

6. Verfahren wie in einem der Ansprüche 1-5 beansprucht, wobei das Innere des Ofens mithilfe von IR-Strahlern erhitzt wird, bevor das Brot mithilfe von Dampf erhitzt wird.

7. Verfahren wie in Anspruch 6 beansprucht, wobei der Ofen erhitzt wird, bis die Temperatur der Rinde einen Wert erreicht hat, der über dem Taupunkt des Dampfes während des Erhitzens des Ofens mittels Dampf liegt.

8. Verfahren wie in Anspruch 6 oder 7 beansprucht, wobei der Ofen auf eine Temperatur zwischen 130°C und 270°C, vorzugsweise zwischen 150°C und 200°C, erhitzt wird.

9. Verfahren wie in Anspruch 6-8 beansprucht, wobei die Hitze, die durch die IR-Strahler abgestrahlt wird, durch Konvektion verteilt wird.

10. Verfahren wie in einem der vorangegangenen Ansprüche beansprucht, wobei das Verfahren bei einem Verkaufspunkt durchgeführt wird und das zumindest vorverarbeitete Brot durch vorgebackenes Brot oder durch ausgebackenes Brot gebildet wird.

11. Verfahren wie in einem der Ansprüche 1-11 beansprucht, wobei das Verfahren bei einem Verkaufspunkt durchgeführt wird und das vorverarbeitete Brot durch Teig gebildet wird.

12. Ofen (1) zum Zubereiten von frischem Brot, umfassend:
- mindestens eine Türoffnung, die mit einer Tür für den Zweck des Führens von Brot, das gebacken werden soll oder gebacken worden ist, in und aus dem Inneren des Ofens, verschließbar ist;
- vakuumbeständige Verschließungsmittel zwischen der Tür und der Türoffnung; **dadurch gekennzeichnet, dass** der Ofen umfasst:
- Heizmittel zum Erhitzen des Brotes, das in dem Inneren des Ofens platziert ist, die Dampferhitzungsmittel (11) zum Erhitzen des Brotes, das in dem Inneren des Ofens platziert ist, umfassen;
- Vakuummittel (12) zum Erzeugen eines Vakuums in dem Inneren des Ofens vor einem Ausbacken oder nach einem Ausbacken.

13. Ofen gemäß Anspruch 12, der Mittel (13) zur IR-Abstrahlung vor dem Erhitzen des Brotes durch Dampfmittel (11) umfasst.

14. Ofen gemäß Anspruch 12 oder 13, der an einem Verkaufspunkt platziert ist.

## Revendications

1. Procédé pour préparer du pain frais, tel que du pain blanc, du pain brun, du pain complet, du pain croûté, de petits produits comme des roulés, des produits à pâte laminée tels que des croissants et des chaussons aux pommes, des pizzas et d'autres produits à pâte pour la boulangerie, comprenant les étapes suivantes consistant à :
préparer au moins du pain prétraité ;
créer un vide à l'intérieur du four avant de faire chauffer le pain en utilisant de la vapeur ;
faire cuire le pain au moins prétraité dans le four en faisant chauffer le pain au moyen d'alimentation de vapeur à l'intérieur du four ; et
après la cuisson du pain prétraité, le pain ainsi cuit est refroidi dans le four au moyen de refroidissement sous vide.

2. Procédé selon la revendication 1, dans lequel le refroidissement sous vide a lieu en réduisant la pression prédominante dans le four jusqu'à une pression finale à laquelle le point de rosée est inférieur à 30°C.

3. Procédé selon la revendication 1 ou 2, dans lequel la vapeur est alimentée à une température supérieure à 60°C.

4. Procédé selon les revendications 1 à 3, dans lequel la vapeur est alimentée à une pression de vapeur qui augmente progressivement jusqu'à une pression finale qui est supérieure à un point de rosée de 60 °C.

5. Procédé selon l'une quelconque des revendications 1 à 4, dans lequel la vapeur est alimentée pendant une durée comprise entre 1 à 10 minutes, de préférence entre 4 et 6 minutes.

6. Procédé selon l'une quelconque des revendications 1 à 5, dans lequel l'intérieur du four est chauffé au moyen du rayonnement IR avant de chauffer le pain au moyen de la vapeur.

7. Procédé selon la revendication 6, dans lequel le four est chauffé jusqu'à ce que la température de la croûte a atteint une valeur qui se trouve au-dessus du point de rosée de la vapeur pendant le chauffage du four au moyen de vapeur.

8. Procédé selon la revendication 6 ou 7, dans lequel le four est chauffé à une température comprise entre 130 °C et 270 °C, de préférence entre 150°C et 200 °C.

9. Procédé selon les revendications 6 à 8, dans lequel la chaleur émise par les radiateurs IR est distribuée par convection.

10. Procédé selon l'une quelconque des revendications précédentes, dans lequel le procédé est réalisé à un emplacement de vente au détail et en ce que le pain au moins prétraité est formé par du pain précuit ou du pain cuit.

11. Procédé selon l'une quelconque des revendications 1 à 10, dans lequel le procédé est réalisé à un emplacement de vente au détail et le pain prétraité est formé avec de la pâte.

12. Four (1) pour préparer du pain frais, comprenant :
au moins une ouverture de porte pouvant se fermer avec une porte ayant pour but de transporter le pain qui doit être cuit ou qui a été cuit dans et hors de l'intérieur du four ;
des moyens de fermeture résistant au vide entre la porte et l'ouverture de porte ;
**caractérisé en ce que** le four comprend :
des moyens de chauffage pour chauffer le pain placé à l'intérieur du four, comprenant des moyens de chauffage à la vapeur (11) pour chauffer le pain placé à l'intérieur du four ;
des moyens de vide (12) pour créer un vide à l'intérieur du four avant la cuisson et après la cuisson.

13. Four selon la revendication 12, comprenant des moyens (13) pour le rayonnement IR avant le chauffage du pain par des moyens (11) de vapeur.

14. Four selon la revendication 12 ou 13, placé dans un emplacement de vente au détail.
